Europäisches Patentamt

**European Patent Office**

**Office européen des brevets**

(19)

(11) Publication number: **0 021 679**

**A1**

(12)

# EUROPEAN PATENT APPLICATION

(21) Application number: **80301902.5**

(22) Date of filing: **06.06.80**

(51) Int. Cl.³: **F 16 C 19/18**
**F 16 C 33/78, F 16 C 33/60**

(30) Priority: **27.06.79 JP 80946/79**

(43) Date of publication of application:
**07.01.81 Bulletin 81/1**

(84) Designated Contracting States:
**DE FR GB IT**

(71) Applicant: **Uchiyama Manufacturing corp.**
**No. 338 Enami**
**Okayama-City Okayama Prefecture(JP)**

(72) Inventor: **Ichiman, Shinzaburo**
**338, Enami**
**Okayama-City, Okayama Prefecture(JP)**

(74) Representative: **Godwin, Edgar James**
**MARKS & CLERK 57-60 Lincoln's Inn Fields**
**London, W.C.2A 3LS(GB)**

(54) **Rolling bearing.**

(57) A first metal seal ring (11) is fitted to each end of the outer race (1) and a second metal seal ring (14) is fitted to the end of each inner race (2) so as to be positioned opposite to the corresponding first ring (11). Escape of each inner race (2) is prevented by engagement of a stop (15) on the first ring (11) with a bent end (20) of the second ring (14). An elastic lip seal (19) made of rubber or synthetic resin is interposed between the rings (11,14) to prevent the penetration of foreign matter such as mud, sand, water, and grass.

FIG.4

EP 0 021 679 A1

- 1 -

## ROLLING BEARING

The present invention relates to a rolling bearing having sealing means at each end.

In conventional rolling bearings there has been generally used adjacent inner races which are separable from each other at the axially central plane for ease of assembling work. However, such well-known rolling bearings have the disadvantages that the inner races are liable to become loosened and separated before mounting on the shaft of a machine, such as an agricultural machine or an automobile, and that, after mounting on the shaft, although looseness of the inner races no longer occurs, the bearing may be often damaged, during the operation, owing to the penetration of foreign matter such as mud, sand, and water into the space between the ends of the inner and outer races and further due to clinging of grass and other filaments.

In order to overcome these disadvantages, according to the present invention, each end of the rolling bearing has sealing means comprising a first metal sealing ring fixed to the outer race, a second metal sealing ring fixed to the corresponding inner race, and a lip seal between the two rings, the rings cooperating with each other to prevent escape of the said inner race from the outer race.

The invention will be described further, by way of example, with reference to the accompanying drawings, in which:

Figure 1 is a fragmentary axial sectional view of a conventional rolling bearing;

Figure 2 is an axial sectional view of another conventional rolling bearing;

Figure 3 is a fragmentary axial sectional view showing the mutual arrangement of inner and outer races, a metal seal ring, and a seal lip of still another conventional rolling bearing;

Figure 4 is an axial sectional view of a rolling bearing according to the present invention;

Figure 5 is a perspective view of a metal seal ring fitted on one end of an outer race of the rolling bearing according to the present invention;

Figure 6 is a perspective view of a metal seal ring used in another embodiment of the rolling bearing according to the present invention;

Figure 7 is a perspective view of a metal seal ring used in still another embodiment of the rolling bearing according to the present invention;

Figure 8 is a fragmentary axial sectional view showing the mutual arrangement of inner and outer races, metal seal rings, and a lip seal in the rolling bearing according to the present invention;

Figure 9 is a fragmentary axial sectional view showing the mutual arrangement of inner and outer races, metal seal rings, and sealing lips used in another embodiment of the rolling bearing according to the present invention; and

Figure 10 is a fragmentary axial sectional view showing the mutual arrangement of inner and outer races, metal seal rings, and a lip seal used in still another embodiment of the rolling bearing according to the present invention.

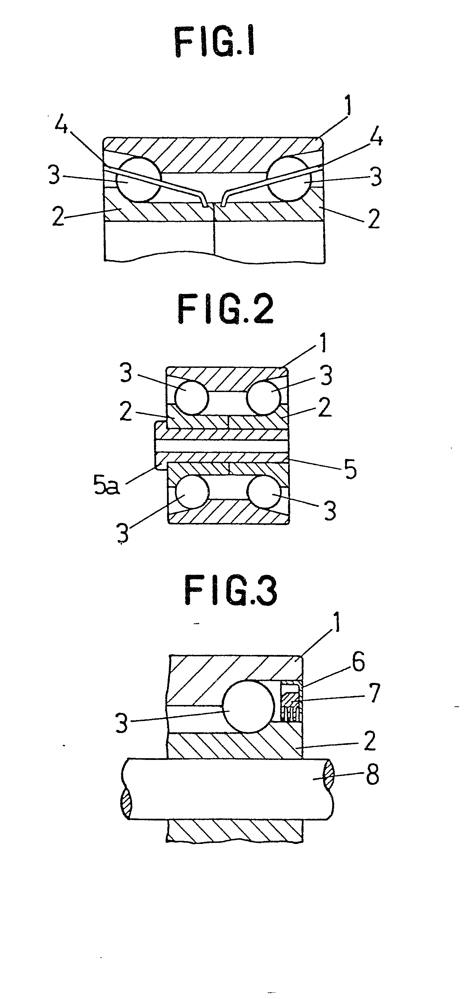

One conventional rolling bearing has an outer race 1, adjacent inner races 2, balls 3 (or other rolling elements), and elastic retainers 4 engaged with each of the inner races 2 to prevent their separation therefrom, as shown in Figure 1.

As shown in Figure 2, another conventional rolling bearing has such structure that a cylindrical bush 5 having an annular flange 5a at its one end is inserted in the through hole of the inner races 2 to hold it temporarily and the bush 5 is removed when the bearing is mounted on the shaft of the machine.

However, the conventional rolling bearings shown in Figures 1 and 2 are arranged only to prevent looseness of the inner races 2, and therefore it is impossible to prevent the penetration of mud, sand, water, grass, and other material into the space between the outer and inner races 1,2.

In still another conventional rolling bearing, as shown in Figure 3, a metal seal ring 6 in the form of an L in cross-section is fitted inside an end of the outer race 1 and a lip seal 7 is secured to the metal seal ring 6 so as to make sliding contact with the outer periphery of the adjacent inner race 2 at its tips. Even in this arrangement, grass and other material may be often held in the space between the inner race 2 and the metal seal ring 6 during the rotation of the inner race 2 together with a shaft 8, and foreign matter such as mud and sand penetrate easily into the space between the inner race 2 and the seal owing to the deformation of the seal 7 (made of elastic material such as rubber or synthetic resin), and these lead to such disadvantages as the reduction of the sealing effect and further the damage of the seal 7.

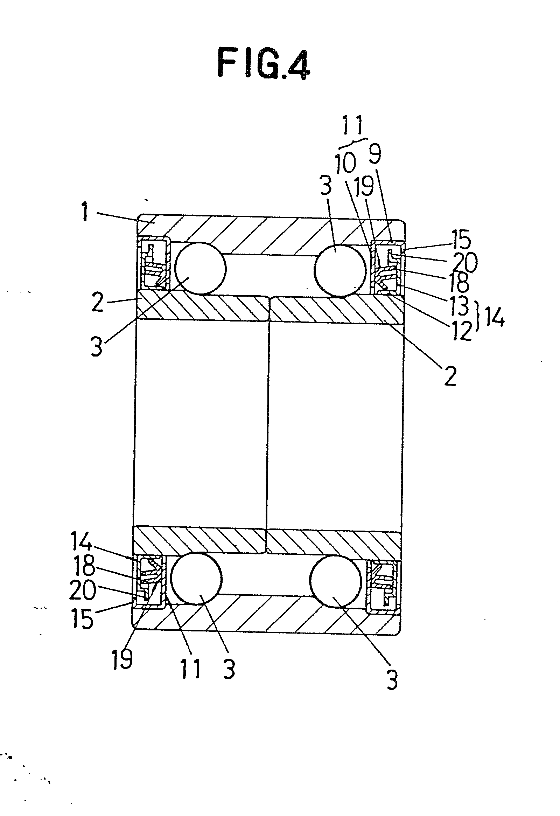

A rolling bearing according to the present invention, as shown in Figure 4, includes an outer race 1, adjacent inner races 2, and balls 3 (or other rolling elements), and is in this respect similar to the conventional one. However, an axially inner metal seal ring 11 having an annular body 9, an annular flange 10, and a flange forming a stop 15 is secured to the end of the outer race 1 by its annular body 9. An axially outer metal seal ring 14 having an annular body 12 and an annular flange 13 with a bent end 20 is secured to the outer end of the adjacent inner race 2 by its annular body 12 and is positioned opposite the seal ring 11. Furthermore, the base of an elastic lip seal 19, having a plurality of lips 18, made of rubber or synthetic resin is secured to the annular flange 10 of the seal ring 11 in the space between the seal rings 11,14 and its annular lips 18 make sliding contact with the annular flange 13 of the seal ring 14. The bent end 20 is positioned axially inside of and a little apart from the stop 15 so as to produce no interference when

0021679

— 4 —

the seal ring 14 is rotated together with the inner race 2.

Therefore the rolling bearing according to the present invention provides a looseness prevention mechanism for the joined inner races 2 before their mounting on the shaft of the machine, since the stop 15 of the seal ring 11 fitted at each end of the outer race 1 is engaged with the bent end 20 of the flange 13 of the seal ring 14 fitted at each end of the inner races 2, although the inner races 2 are still unsteady to some degree. Thus, looseness of the inner races 2 is prevented positively. In addition, during the rotation of the seal rings 14 together with the inner races 2, mud, sand, water, grass, dust and other matter tending to enter the space between the outer and inner races 1,2 from the outside are repelled by the ring flanges 13 when the seal rings 14 rotate together with the inner races 2. Also, the penetration of such foreign matter is further prevented by the labyrinth effect resulting from the combination of the stop 15 and the bent end 20, which is incidental to the above looseness prevention mechanism for the inner races 2.

The rotation of the inner races 2 is never disturbed, because there is no contact between the seal rings 11,14 during the operation of the bearing.

The penetration of mud, sand, water, grass, dust, and other foreign matter from the outside and the effluence of grease and oil from the inside towards the outside are prevented with certainty, by virtue of the labyrinth effect of the seal 19 having a plurality of lips.

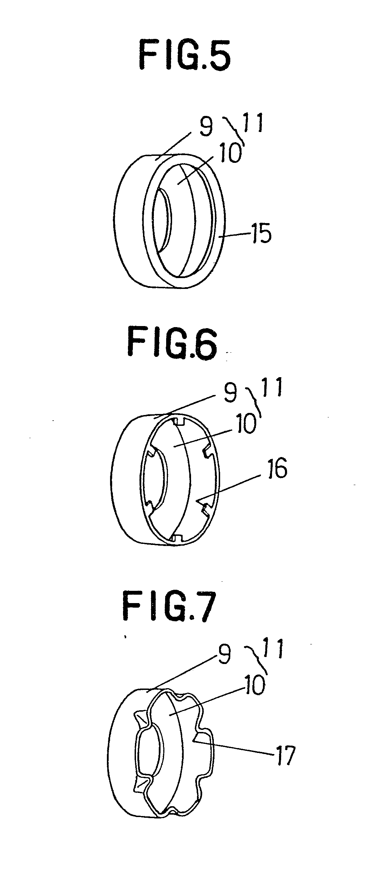

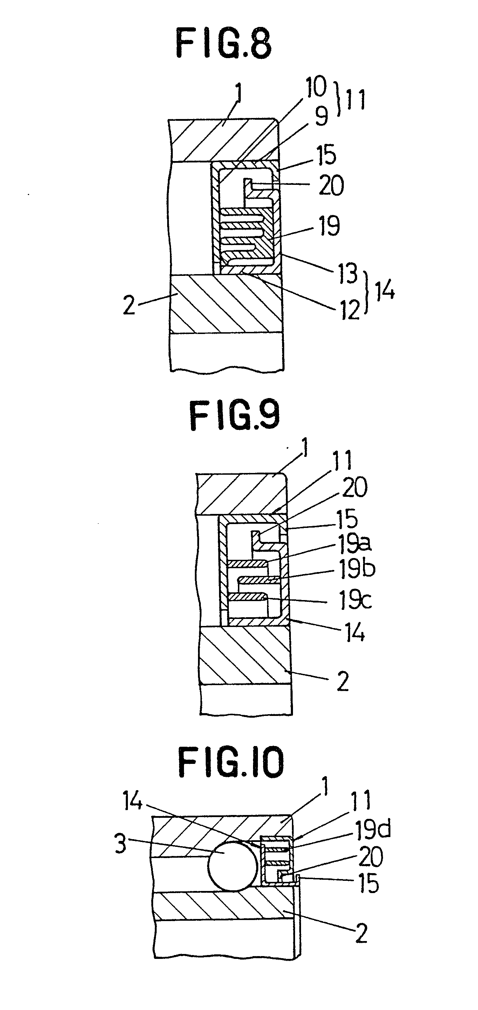

The form of the stop 15 is not limited to that of an annular flange (Figures 4 and 5). In place of the annular flange, a plurality of projections 16 may be formed at the outer edge of the annular body 9, as shown in Figure 6, or a plurality of projected edges 17 may be formed by bending the outer edge of the annular body 9 inwards locally, as shown in Figure 7. Those projections or projected edges can be formed by beating or other methods after fitting the seal rings 11,14 to the ends of outer and inner races 1,2 respectively.

Furthermore, the seal 19 can be interposed in such a manner that its base is secured to the seal ring 14 fitted on the inner race 2 and that the tips of its lips are in sliding contact with the flange 10 of the seal ring 11 fitted to the adjacent end of the outer race 1, as shown in Figure 8. In another embodiment, as shown in Figure 9, seal lips 19a, 19b, and 19c are alternatively secured to the seal rings 11,14 at their bases and their tips are positioned adjacently to each other and intercalated without contacting the opposite seal ring. Both of these alternative structures of the seal also produce the labyrinth effect which prevents the penetration of mud, sand, water, grass, dust, and other foreign matter, as well as the effluence of grease and oil.

Figure 10 shows still another embodiment of the present invention, in which the shapes of the metal seal rings are reversed with respect to the embodiment as shown in Figure 4. More specifically, the metal seal ring 11 has the bent end 20 and is fitted on the end of the outer race 1, whereas the metal seal ring 14 has the stop 15 and is fitted on the end of the adjacent inner race 2. In the space between the seal rings 11,14, a lip seal 19d is interposed, with its base secured to the seal ring 14 and its tips in sliding contact with the seal ring 11. In this arrangement, foreign matter such as mud, sand, water, grass, and dust will not be repelled, even by the rotation of the metal seal rings 14 together with the inner races 2. Therefore, it is preferable that the aforementioned embodiments except the embodiment as shown in Figure 10 are applied to agricultural machines.

As described above, it will be evident that the rolling bearing according to the present invention has the following superior functions and advantages over the conventional one: the separation of the inner races is prevented by the engagement of the metal seal rings; the penetration of foreign matter such as mud, sand, water, grass, and dust from the outside and the effluence of grease and oil toward the outside are prevented by virtue of the positive sealing of the space between the inner and outer races of the bearing; and the simplified structure permits easy mounting on the shaft of a machine and thus an improvement in efficiency of assembly work.

Further, the construction of the rolling bearing according to the present invention, which has the effect that the penetration of foreign matter such as mud, sand, water, grass, and dust is prevented, also can be applied to rolling bearings being used in a part in which such foreign matter is liable to penetrate.

CLAIMS

1.  A rolling bearing having an outer race (1), a pair of inner races (2), two sets of rolling elements (3) between the respective inner races (2) and the outer race (1), and sealing means between each end of the outer race (1) and the respective inner race (2), characterized in that each sealing means comprises a first metal seal ring (11) fixed to the outer race (1), a second metal seal ring (14) fixed to the corresponding inner race (2), and a lip seal (19) between the metal seal rings (11,14), the metal seal rings (11,14) cooperating with each other to prevent the said inner race (2) escaping from the outer race (1).

2.  A rolling bearing as claimed in claim 1, in which the first metal seal ring (11) comprises an axially-inner annular flange (10) and an axially-outer stop (15,16,17) which cooperates with the second metal seal ring (14) to prevent the said inner race (2) from escaping.

3.  A rolling bearing as claimed in claim 2, in which the second metal seal ring (14) comprises an annular flange (13) having an axially-inwardly and radially-outwardly bent end (20) which cooperates with the stop means (15,16,17).

4.  A rolling bearing as claimed in any of claims 1 to 3, in which the seal (19) has a base secured to one of the metal seal rings (11 or 14) and lips (18) for making sliding contact with the other metal seal ring (14 or 11) at their tips.

5.  A rolling bearing as claimed in any of claims 1 to 3, in which the seal (19) comprises a plurality of annular lips (19a, 19b, 19c) secured alternately to the metal seal rings (11,14) and intercalated.

# FIG.1

# FIG.2

# FIG.3

# FIG.4

0021679

# FIG.5

# FIG.6

# FIG.7

FIG.8

FIG.9

FIG.IO

## EUROPEAN SEARCH REPORT

| | | Application number |
| --- | --- | --- |
| European Patent Office | EUROPEAN SEARCH REPORT | EP 80 30 1902 |

| DOCUMENTS CONSIDERED TO BE RELEVANT | | | CLASSIFICATION OF THE APPLICATION (Int. Cl. ³) |
| --- | --- | --- | --- |
| Category | Citation of document with indication, where appropriate, of relevant passages | Relevant to claim | |
| | US - A - 2 132 838 (WECKSTEIN) <br> * Whole document * <br><br> -- | 1,2 | F 16 C 19/18 <br> 33/78 <br> 33/60 |
| | GB - A - 1 233 669 (FRW) <br> * Page 2, line 93 - page 3, line 64; figure 2 * <br><br> -- | 1,4 | |
| P | FR - A - 2 431 080 (CHROMEX) <br> * Page 2, lines 12-24; page 3, line 34 - page 4, line 3; figure 2 * <br><br> -- | 1,4 | TECHNICAL FIELDS SEARCHED (Int.Cl.³) |
| D,E | FR - A - 2 439 902 (CHRYSLER) <br> * Page 4, line 26 - page 6, line 22; figure 2 * <br><br> -- | 1,2 | F 16 C |
| | US - A - 2 856 208 (COBB) <br> * Column 2, lines 3-73; figure 1 * <br><br> -- | 4 | |
| | FR - A - 2 273 973 (GROSSMANN) <br> * Whole document * <br><br> ---- | 5 | CATEGORY OF CITED DOCUMENTS |

| The present search report has been drawn up for all claims | | |
| --- | --- | --- |
| Place of search <br> The Hague | Date of completion of the search <br> 07-10-1980 | Examiner <br> BARON |